# EUROPEAN PATENT SPECIFICATION

(11) **EP 4 390 163 B1**
(45) Date of publication and mention of the grant of the patent: **04.12.2024**
(21) Application number: 23217408.6
(22) Date of filing: 18.12.2023
(51) Int. Cl.: F16C 19/06, F16C 23/08, F16C 19/52, F16C 33/72, F16C 33/78, F16C 35/067, F16C 35/063, F16C 33/58, F16C 41/00, F16J 15/00

(54) **SENSORIZED SUPPORT ASSEMBLY**
SENSORISIERTE STÜTZANORDNUNG
ENSEMBLE SUPPORT À CAPTEUR

(30) Priority: 23.12.2022 IT 202200026772
(43) Date of publication of application: 26.06.2024
(73) Proprietor: Aktiebolaget SKF, 415 50 Göteborg (SE)
(72) Inventor: Cavacece, Fabio, 00199 Roma (IT); Bertolini, Andrea A., 54033 Carrara (IT); Baracca, Fausto, 54100 Massa (IT); Frezza, Pasquale, 81031 Aversa (CE) (IT)
(74) Representative: Tedeschini, Luca

(56) References cited:
- ES-U- 1 162 283
- US-A1- 2011 088 467
- US-A1- 2021 009 318

## Description

### Technical field of the invention

The present invention relates to a support assembly.

More specifically, the present invention relates to a sensorized support assembly for use in the food industry, as specified below, but is generally applicable.

### Prior art

In the food industry, known support assemblies are formed by a casing provided with a fastening flange for fastening to a frame of a machine; a bearing unit positioned inside the casing to support a moveable shaft and provided with a ball-and-socket coupling with the casing itself to make good any static mounting misalignments between the moveable shaft and the static frame; and a cover, which is normally cup-shaped, force-fitted onto the casing. The moveable shaft may be a through-shaft, in which case the support assembly, or the cover thereof, is referred to as being open-bottom. In the case of non-through-shafts, the support assembly, or the cover thereof, is referred to as being closed-bottom.

In food industry applications, a first technical problem relates to the hygiene-related requirement to wash machinery and the components thereof frequently, often using somewhat aggressive and corrosive washing fluids. Consequently, the aforementioned known bearing units are also provided with sealing devices, which are arranged on opposite sides of the bearing unit to prevent the ingress of any external contaminants into the bearing unit.

Notwithstanding the presence of sealing devices, it is beneficial to provide the cover to seal the support assembly and to prevent highpressure washing jets coming into direct contact with the bearing unit. These jets can reach pressures in the order of 100 bar and can cause failure of the sealing devices, and consequently failure of the bearing. The function of the cover is therefore to further protect the bearing unit.

However, in the unlikely event that washing liquids manage to filter into and/or penetrate the cover and pool inside the cover, with consequent problems of contamination, the operator can perform a visual check to determine whether any water has entered the installation by removing the cover after washing has been completed. Such manual inspections take a significant amount of time. Furthermore, such manual inspections introduce a new risk of water ingress, relating to incorrect mounting of the cover: like any manual operation, such inspections cannot be guaranteed error-free.

A second technical problem affecting known support assemblies for food industry applications relates to the maximum permissible temperature, which is relatively low at approximately 80°C. The temperature level cannot be monitored using a measurement system installed outside the unit, for example using a thermocouple, since this would not be compatible with the hygiene standards applicable to food industry applications.

US 2021/009318 A1 shows a support assembly according to the preamble of claim 1.

### Summary of the invention

The present invention is intended to provide a support assembly for food industry applications that does not have the aforementioned drawbacks.

The present invention provides a sensorized support assembly having the features set out in the attached claims.

### Brief description of the drawings

The invention is described below with reference to the attached drawings, which show some non-limiting example embodiments of the invention, in which:
- Figure 1 is an axonometric view of a first preferred embodiment of a support assembly according to the present invention,
- Figure 2 shows the support assembly in Figure 1 in cross section,
- Figure 3 shows a second preferred embodiment of a support assembly according to the present invention in cross section, and
- Figure 4 is a magnified axonometric view of a detail of the support assembly in Figure 1.

### Detailed description

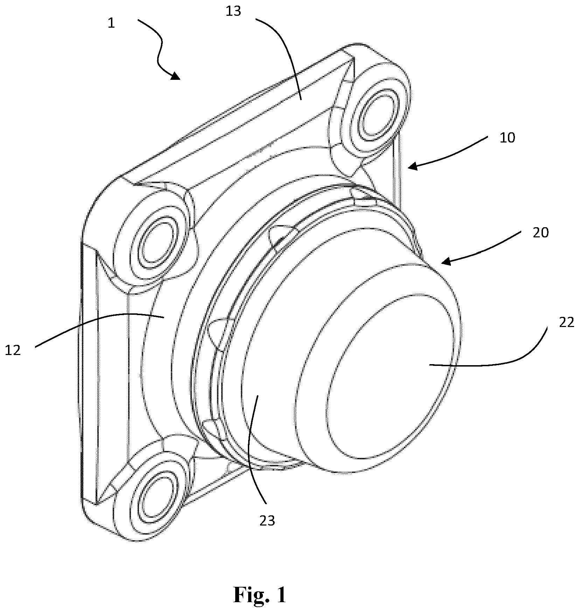

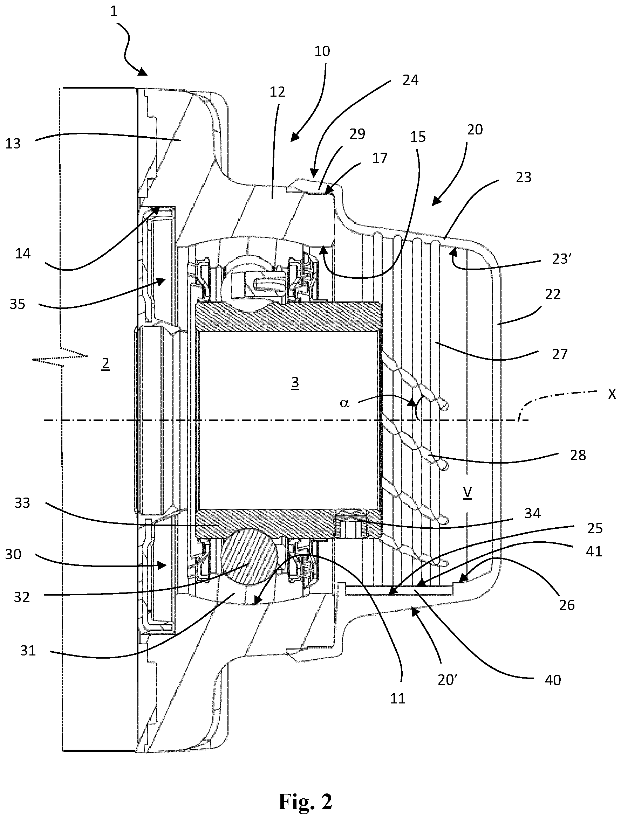

In Figures 1 and 2, reference sign 1 denotes a support assembly as a whole, said support assembly being designed to be interposed between a first mechanical element 2 and a second mechanical element 3, preferably but not exclusively comprising a static frame 2 and a rotary shaft 3 of a food-industry machine (both of which are known and therefore shown only schematically in the figures).

According to this first, preferred embodiment, the support assembly 1 has a central axis X and comprises:
- a flanged casing 10 designed to be mounted on the frame and provided internally with a through-seat 15 and a mounting seat 11 axially inside the through-seat 15,
- a cover 20 for closing the through-seat 15 of the casing 10 in a fluid-tight manner, and
- a bearing unit 30 mounted inside the mounting seat 11 to support the rotary shaft. The bearing unit 30 is also provided with a sealing device 35 arranged on opposite sides of the bearing unit 30 for preventing any ingress of washing fluids and/or other contaminants into the bearing unit 30.

The flanged casing 10 in turn comprises a main tubular body 12 axially open at the opposing ends thereof and defining an exposed axially outer portion of the support assembly 1, i.e. a portion oriented away from the static frame 2 and directly exposed to the washing fluids, and a flange 13 that is transverse to the axis X, integral with the body 12, and provided with an internal cylindrical seat 14 arranged axially beside the mounting seat 11 and in communication with the mounting seat 11. Conversely, the flange 13 defines an axially inner portion of the support assembly 1, i.e. a portion oriented towards the static frame 2.

Evidently, the embodiment of the casing 10 shown in Figure 1 is just one possible embodiment. For example, the base or flange 13, which is square in the illustrated example, can have a different symmetrical or asymmetrical shape.

The cover 20 for the casing 10 is generally cup-shaped and comprises a bottom wall 22, an annular side wall 23 that extends transversely to the bottom wall 22, and a coupling portion 24 for coupling with the casing 10. The cup-shape of the cover 20 defines an internal volume V therein.

The bearing unit in turn comprises:
- a convex, stationary radially outer ring 31,
- a radially inner ring 33 that is rotary about the central axis X and provided with a fastening device 34 for fastening the bearing unit 30 to the rotary shaft 3, and
- a plurality of rolling elements 32, specifically balls, interposed between the radially outer ring 31 and the radially inner ring 33 to enable relative rotation between the radially inner ring 33 and the radially outer ring 31.

Throughout the present description and in the claims, terms and expressions indicating positions and orientations, such as "radial" and "axial", are to be understood with reference to the central axis of rotation X of the bearing unit 30.

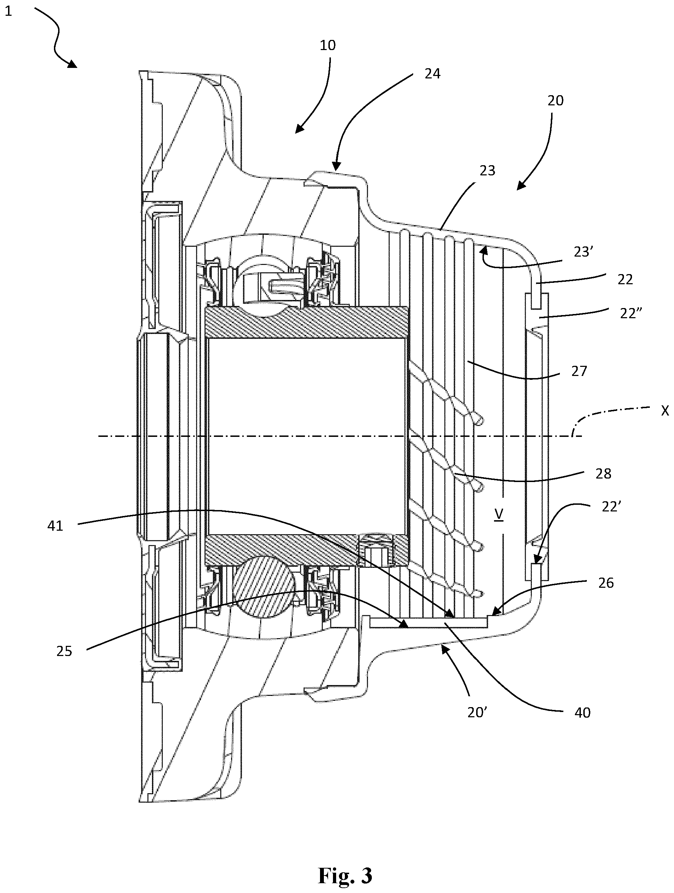

In some applications, the rotary shaft 3 is a through-shaft. For these applications, and with reference to Figure 3, the support assembly 1, in a second, preferred embodiment, is provided with a cover 20 in which the bottom wall 22 comprises a central aperture 22' for the rotary shaft 3, and a gasket 22" that is provided with one or more contacting lips and mounted in the central aperture 22' to create a seal on the shaft 3.

The solution according to the present invention may be applied to both preferred embodiments of the support assembly.

According to the invention, the cover 20 is provided with a sensor 40 for monitoring the relative humidity inside the cover 20.

The sensor 40 is assembled in a support portion 26 for the sensor 40 positioned inside the annular side wall 23 of the cover 20.

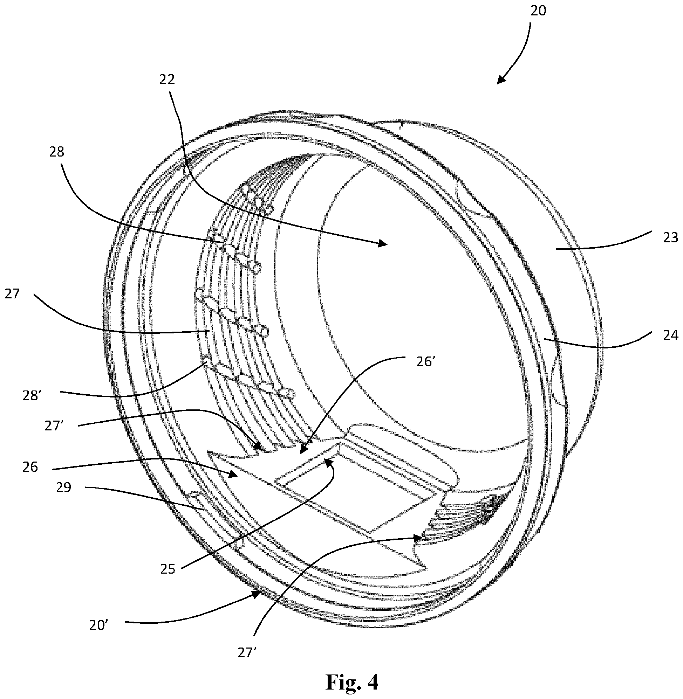

With reference to Figure 4, the support portion 26 is obtained by levelling a section of the annular wall 23, and therefore has a flat surface 26' inside which a seat 25 can be formed for the sensor 40, depending on the procedure selected for production of the sensorized cover.

Once the cover 20 has been mounted on the casing 10, the support portion 26 for the sensor 40 is positioned in a lower portion 20' of the cover 20, where any fluid that has penetrated the cover 20 will accumulate under the effect of gravity. The lower portion 20' of the cover 20 is the cover portion that, once mounted, comprises the lowest point of the cover with respect to a bearing plane for the machine as a whole. This means that the support portion 26 is where the liquid accumulates, and therefore that relative humidity can be measured more reliably given the guaranteed presence of fluid, if any fluid has penetrated the cover 20.

In greater detail, the cover 20 is anchored to the casing 10 by means of a bayonet coupling, and the coupling portion 24 of the cover 20 has a plurality of teeth 29 that engage in a slot 17 in the tubular body 12 of the casing 10. In this anchoring method, since the angular coupling position of the teeth 29 in the slot 17 and the angle through which the teeth 29 are rotated to effect the bayonet coupling are known, the support portion 26 of the sensor need simply be brought into phase with one of the teeth 29 to ensure that the support portion 26, once mounted, is in the position corresponding to the lower portion 20' of the cover 20 (error-proof or "poka-yoke" mounting).

According to a first embodiment, the sensor 40 can be co-moulded with the cover 20. In this case, the support portion 26 for the sensor 40 is a structure formed about the sensor, integral with the sensor, and closely connected to the outer surface of the sensor.

The co-moulding of the sensor 40 is performed such that the sensor 40 has a free surface 41, which is preferably coplanar with the flat surface 26' of the support portion 26, or at most slightly recessed from said flat surface 26'. The free surface 41, potentially hit by droplets of fluid, is able to provide a reliable reading of relative humidity.

In a second embodiment, the sensor 40 is mounted with interference in the seat 25 formed in the support portion 26. Also in this case, the sensor 40 has a free surface 41, which is preferably coplanar with the flat surface 26' of the support portion 26, or at most slightly recessed therefrom.

The sensor 40 can preferably be a multi-parameter sensor, in which case the sensor can also monitor the temperature inside the support assembly 1, in particular inside the volume V defined by the cover 20.

This solution resolves the aforementioned technical problems of water penetrating the support assembly and monitoring internal temperature, as follows:
- monitoring relative humidity reveals the presence of water inside the support assembly. Indeed, as shown by a rigorous testing campaign, trends in relative humidity can indicate the ingress of water into the support assembly 1 through the coupling portion 24 of the cover 20. Consequently, monitoring the relative humidity measured by the sensor obviates the need to remove the cover to carry out a manual inspection once washing has been completed, thereby saving time in the process, and most importantly reducing the risk of water ingress caused by incorrect mounting of the cover,
- using a multi-parameter sensor enables the internal temperature of the casing to be monitored as well, preventing the temperature from exceeding the maximum permissible temperature of approximately 80°C.

The aforementioned testing campaign also revealed that the most precise and reliable results were obtained by positioning the sensor 40 in the lower portion 20' of the cover 20, since water tends to accumulate there under the effect of gravity.

Advantageously, to further encourage the flow of water towards the sensor 40, the cover 20 is provided with a first plurality of circumferential grooves 27 along an inner surface 23' of the annular side wall 23 that act as slides or gutters for the water droplets. The circumferential grooves 27 extend along respective directrix curves of the inner surface 23' and the ends 27' converge on the flat surface 26' of the support portion 26 for the sensor 40.

A second plurality of substantially axial grooves 28, arranged transversely to this first plurality of circumferential grooves 27 and also along the inner surface 23' of the annular side wall 23, is provided to connect the coupling portion 24 of the cover 20 to the first plurality of circumferential grooves 27. In other words, the objective is thus to use the second plurality of substantially axial grooves 28 and the first plurality of circumferential grooves 27 to connect the points of potential water ingress between the coupling portion 24 of the cover 20 and the tubular body 12 of the casing 10 to the water accumulation point surrounded by the support portion 26 of the sensor 40.

Advantageously, the solution according to the present invention requires some additional technical features relating to both the first plurality of circumferential grooves 27 and the second plurality of substantially axial grooves 28:
- in a cross section corresponding to the inner surface 23' of the annular side wall 23, the circumferential grooves 27 and the substantially axial grooves 28 are between 2 mm and 3 mm wide, given that the mean diameter of the water droplets is between 1 mm and 3 mm,
- there must be at least three circumferential grooves 27, with a distance between two consecutive grooves at least 1.5 times the width of the groove. In any case, the position of the circumferential grooves 27 in the axial direction must be centred on the axial position of the sensor 40 so as to collect the liquid as close as possible to the sensor,
- there must be at least three substantially axial grooves 28, which are concentrated in particular in the lower portion 20' of the cover 20,
- one end 28' of the substantially axial grooves 28 must be as close as possible to the coupling portion 24 of the cover 20, since this zone is the potential liquid ingress point, as mentioned above,
- the substantially axial grooves 28 may be inclined at an angle of between 30° and 45° to the central axis X,
- both the circumferential grooves 27 and the substantially axial grooves 28 are obtained by moulding together with the cover 20 as a whole, and their formation therefore does not require additional processing, while providing good roughness to enable good droplet flow.

The dimensions of the sensor 40 can preferably be 19x19x2.5 mm, which are the dimensions of the sensor used in the testing campaign. The thickness of the sensor 40 (2.5 mm) coincides substantially with the thickness of the seat 25, which may be between 2.5 mm and 2.6 mm. Naturally, the dimensions of the sensor may vary depending on the application.

In the case of a sensor 40 mounted with interference in the seat 25, the sensor can be removed and replaced if necessary. It is beneficial to form a small slot beside the seat 25 to enable a screwdriver (for example) to be used to facilitate removal.

The colour of the sensor may be personalized, and multi-parameter sensors can also be used to take additional measurements, such as vibration measurements. It may be particularly useful to monitor any intense vibrations caused by malfunction of the casing (for example if the case is cracked) and transmitted almost in full to the cover by means of the substantially rigid coupling between the casing and the cover.

In summary, the present invention provides the following advantages:
- primarily, the invention enables the ingress of water into the support assembly 1 to be monitored. The frequent intensive washing phases may cause the ingress of water, which will be identified by the sensor 40, which will indicate a variation in relative humidity,
- in parallel, where the sensor 40 is a multi-parameter sensor, the temperature in the internal volume defined by the cover 20 can also be monitored,
- advantageously, limit thresholds for relative humidity and temperature may be set, so that warnings are only received when such thresholds are exceeded,

- the sensorized cover 20 is the same size as a known, non-sensorized cover. As a result, the sensorized cover 20 is perfectly interchangeable with a standard cover,
- the proposed solution will not result in a reduced service life compared to known embodiments, since the sensor battery lasts approximately 15 years.

Numerous other variants exist in addition to the embodiments of the invention described above. Such embodiments should also be understood to be examples and do not limit the scope, applications or possible configurations of the invention. Indeed, although the description provided above enables the person skilled in the art to carry out the present invention at least according to one example configuration thereof, numerous variations of the components described could be used, without thereby departing from the scope of the invention, as defined in the attached claims.

## Claims

1. Support assembly (1) having a central axis (X) and comprising:
- a flanged casing (10) comprising a through-seat (15) and a mounting seat (11) axially inside the through-seat (15),
- a cover provided with a coupling portion (24) for closing the through-seat (15) of the casing (10) in a fluid-tight manner, and an annular wall (23), and
- a bearing unit (30) seated inside the mounting seat (11),
the support assembly (1) being **characterized in that**
- the cover (20) is provided with a sensor (40) for monitoring the relative humidity inside the support assembly (1),
and **in that**
- the sensor (40) is assembled in a support portion (26) of the cover (20) positioned inside the annular side wall (23), which corresponds to a lower portion (20') of the cover (20) once the cover (20) has been mounted on the casing (10), where any fluid that has penetrated the cover (20) will accumulate under the effect of gravity.

2. Support assembly (1) according to Claim 1, in which the sensor (40) is co-moulded with the cover (20).

3. Support assembly (1) according to Claim 1, in which the sensor (40) is mounted with interference in a seat (25) formed in the support portion (26).

4. Support assembly (1) according to Claim 1, in which the support portion (26) for the sensor (40) has a flat surface (26').

5. Support assembly (1) according to Claim 4, in which the sensor (40) has a free surface (41) that is coplanar with the flat surface (26').

6. Support assembly (1) according to one of the preceding claims, in which the cover (20) is provided with a first plurality of circumferential grooves (27) along an inner surface (23') of the annular side wall (23).

7. Support assembly (1) according to Claim 6, in which there are at least three grooves in the first plurality of circumferential grooves (27), and said grooves have ends (27') that converge on the flat surface (26') of the support portion (26).

8. Support assembly (1) according to Claim 6, in which the cover (20) is provided with a second plurality of grooves (28) transverse to the first plurality of circumferential grooves (27) along the inner surface (23') of the annular side wall (23).

9. Support assembly (1) according to Claim 8, in which there are at least three grooves in the second plurality of grooves (28) and the grooves are positioned in the lower portion (20') of the cover (20).

10. Support assembly (1) according to one of the preceding claims, in which the sensor (40) is a multi-parameter sensor that also monitors the temperature inside a volume (V) of the cover (20).

## Patentansprüche

1. Stützbaugruppe (1) mit einer mittleren Achse (X) und umfassend:
- ein geflanschtes Gehäuse (10), das einen Durchgangssitz (15) und einen axial innerhalb des Durchgangssitzes (15) angeordneten Montagesitz (11) umfasst,
- eine Abdeckung, die mit einem Koppelabschnitt (24) versehen ist, um den Durchgangssitz (15) des Gehäuses (10) fluiddicht zu verschließen, sowie einer ringförmigen Wand (23) und
- eine in dem Montagesitz (11) sitzende Lagereinheit (30),
wobei die Stützbaugruppe (1) **dadurch gekennzeichnet ist, dass**
- die Abdeckung (20) mit einem Sensor (40) zur Überwachung der relativen Feuchtigkeit in der Stützbaugruppe (1) versehen ist,
und dass
- der Sensor (40) in einem Stützabschnitt (26) der Abdeckung (20) montiert ist, der innerhalb der ringförmigen Seitenwand (23) positioniert ist, was einem unteren Abschnitt (20') der Abdeckung (20) entspricht, wenn die Abdeckung (20) an dem Gehäuse (10) montiert ist, wo sich etwaiges Fluid, das durch die Abdeckung (20) eingedrungen ist, unter Schwerkraftwirkung ansammelt.

2. Stützbaugruppe (1) nach Anspruch 1, wobei der Sensor (40) durch Co-Molding mit der Abdeckung (20) ausgebildet ist.

3. Stützbaugruppe (1) nach Anspruch 1, wobei der Sensor (40) mit Presspassung in einem in dem Stützabschnitt (26) ausgebildeten Sitz (25) montiert ist.

4. Stützbaugruppe (1) nach Anspruch 1, wobei der Stützabschnitt (26) für den Sensor (40) eine flache Fläche (26') hat.

5. Stützbaugruppe (1) nach Anspruch 4, wobei der Sensor (40) eine freie Fläche (41) hat, die mit der flachen Fläche (26') komplanar ist.

6. Stützbaugruppe (1) nach einem der vorhergehenden Ansprüche, wobei die Abdeckung (20) mit einer ersten Vielzahl von Umfangsnuten (27) entlang einer Innenfläche (23') der ringförmigen Seitenwand (23) versehen ist.

7. Stützbaugruppe (1) nach Anspruch 6, wobei die erste Vielzahl von Umfangsnuten (27) mindestens drei Nuten aufweisen und die Nuten Enden (27') haben, die auf der flachen Fläche (26') des Stützabschnitts (26) konvergieren.

8. Stützbaugruppe (1) nach Anspruch 6, wobei die Abdeckung (20) mit einer zweiten Vielzahl von Nuten (28) versehen ist, die quer zu der ersten Vielzahl von Umfangsnuten (27) entlang der Innenfläche (23') der ringförmigen Seitenwand (23) verlaufen.

9. Stützbaugruppe (1) nach Anspruch 8, wobei die zweite Vielzahl von Nuten (28) mindestens drei Nuten aufweisen und die Nuten in dem unteren Abschnitt (20') der Abdeckung (20) positioniert sind.

10. Stützbaugruppe (1) nach einem der vorhergehenden Ansprüche, wobei der Sensor (40) ein Multiparameter-Sensor ist, der auch die Temperatur in einem Volumen (V) der Abdeckung (20) überwacht.

## Revendications

1. Ensemble support (1) ayant un axe central (X) et comprenant :
- un boîtier à bride (10) comprenant un siège traversant (15) et un siège de montage (11) axialement à l'intérieur du siège traversant (15),
- un couvercle pourvu d'une partie d'accouplement (24) pour fermer le siège traversant (15) du boîtier (10) de manière étanche aux fluides, et une paroi annulaire (23), et
- une unité palier (30) logée à l'intérieur du siège de montage (11),
l'ensemble support (1) étant **caractérisé en ce que**
- le couvercle (20) est pourvu d'un capteur (40) pour surveiller l'humidité relative à l'intérieur de l'ensemble support (1),
et **en ce que**
- le capteur (40) est assemblé dans une partie de support (26) du couvercle (20) positionnée à l'intérieur de la paroi latérale annulaire (23), qui correspond à une partie inférieure (20') du couvercle (20) une fois que le couvercle (20) a été monté sur le boîtier (10), où tout fluide qui a pénétré le couvercle (20) va s'accumuler sous l'effet de la gravité.

2. Ensemble support (1) selon la revendication 1, dans lequel le capteur (40) est co-moulé avec le couvercle (20) .

3. Ensemble support (1) selon la revendication 1, dans lequel le capteur (40) est monté avec serrage dans un siège (25) formé dans la partie de support (26).

4. Ensemble support (1) selon la revendication 1, dans lequel la partie de support (26) pour le capteur (40) a une surface plate (26').

5. Ensemble support (1) selon la revendication 4, dans lequel le capteur (40) a une surface libre (41) qui est coplanaire avec la surface plate (26').

6. Ensemble support (1) selon l'une des revendications précédentes, dans lequel le couvercle (20) est pourvu d'une première pluralité de rainures circonférentielles (27) le long d'une surface interne (23') de la paroi latérale annulaire (23).

7. Ensemble support (1) selon la revendication 6, dans lequel il y a au moins trois rainures dans la première pluralité de rainures circonférentielles (27), et lesdites rainures ont des extrémités (27') qui convergent sur la surface plate (26') de la partie de support (26).

8. Ensemble support (1) selon la revendication 6, dans lequel le couvercle (20) est pourvu d'une deuxième pluralité de rainures (28) transversale à la première pluralité de rainures circonférentielles (27) le long de la surface interne (23') de la paroi latérale annulaire (23) .

9. Ensemble support (1) selon la revendication 8, dans lequel il y a au moins trois rainures dans la deuxième pluralité de rainures (28) et les rainures sont positionnées dans la partie inférieure (20') du couvercle (20) .

10. Ensemble support (1) selon l'une des revendications précédentes, dans lequel le capteur (40) est un capteur multi-paramètres qui surveille également la température à l'intérieur d'un volume (V) du couvercle (20).
